Europäisches Patentamt

European Patent Office

Office européen des brevets

(19)

(11) Publication number: **0 287 400**
**A2**

(12) # EUROPEAN PATENT APPLICATION

(21) Application number: **88303443.1**

(22) Date of filing: **15.04.88**

(51) Int. Cl.⁴: **B 29 C 55/18**

(30) Priority: **16.04.87 JP 93933/87**

(43) Date of publication of application:
**19.10.88 Bulletin 88/42**

(84) Designated Contracting States:
**AT BE CH DE FR GB IT LI LU NL SE**

(71) Applicant: **TONEN SEKIYUKAGAKU KABUSHIKI KAISHA**
**1-1, Tsukiji 4-chome Chuo-ku**
**Tokyo 104 (JP)**

(72) Inventor: **Kagawa, Seiji**
**27-1-126 Baba 3-chome Tsurumi-ku**
**Yokohama-shi Kanagawa-ken (JP)**

**Toda, Hideaki**
**1642-174 Kamariya-cho Kanazawa-ku**
**Yokohama-shi Kanagawa-ken (JP)**

(74) Representative: **Dew, Melvyn John et al**
**Exxon Chemical Limited Exxon Chemical Technology**
**Centre P.O. Box 1**
**Abingdon Oxfordshire, OX13 6BB (GB)**

(54) **Method for production of rolled film and apparatus therefore.**

(57) An apparatus for the production of a rolled film from a thermoplastic resin sheet, the apparatus including a pair of screw-shaped rolls provided with curves spiraling in opposite directions from the center and rotated at an equal speed in mutually opposite directions as separated from each other by a prescribed gap so that when said sheet is passed through said gap between said pressing rolls, it is rolled simultaneously in the direction of thickness of the sheet and in the direction of width of the sheet.

EP 0 287 400 A2

Description

# METHOD FOR PRODUCTION OF ROLLED FILM AND APPARATUS THEREFORE

## 1. Field of the Invention

This invention relates to a method and an apparatus for the production of a rolled film from a thermoplastic resin sheet. More particularly, this invention relates to a method for the production of a rolled film by the use of a pair of screw-shaped rolls such that a thermoplastic sheet can be rolled simultaneously in the longitudinal or machine direction and the lateral or transverse direction, and an apparatus for working the method mentioned above.

## 2. Description of the Prior Art

Biaxially drawn film has been produced by first drawing film in the longitudinally and then laterally with the opposite edges thereof secured in chucks. The biaxial two step drawing operation described above, makes the method used for the production of biaxially drawn film as a whole complicated.

In a different film making technique, rolled film is produced by passing and simultaneously, squeezing a thermoplastic sheet between a pair of cylindrical pressing rolls. The rolled film so produced may have high strength and high modulus when the polymer molecules are oriented and crystallized while applying high pressure.

Conventional formed rolled film however, may have molecules densely oriented substantially in the direction of thickness. Strength and resistance to tear propagation in the longitudinal direction may be unsatisfactory. Also, neckin (irregular shrinkage) in the direction of width of increasing the thickness of edge beads may occur. The film strength may be altered by amorphous defective crystalline portions.

An object of this invention, therefore, is to provide a method for the production of a rolled film possessing sufficient resistance to tear propagation and sufficient strength and exhibiting high transparency by enabling the sheet to be rolled simultaneously in the direction of thickness and in the direction of width.

Another object of this invention is to provide a apparatus to be used for the production of the film mentioned above.

## BRIEF SUMMARY OF THE INVENTION

The invention provides a method for the production of film by rolling a thermoplastic resin sheet between a pair of spaced pressing rolls, which method comprises rolling the sheet through a gap between a pair of pressing rolls which are provided with curves spiraling in opposite directions from an intermediate portion and are rotated at an equal speed in mutually opposite directions so that when said sheet passes through said gap, it is rolled simultaneously in the direction of thickness of the sheet and in the direction of width of the sheet.

## BRIEF DESCRIPTION OF THE DRAWINGS

Fig. 1 is a schematic diagram illustrating a typical apparatus for the production of a rolled film as one embodiment of the present invention.

Fig. 2 is a magnified view illustrating details of pressing rolls embodying the present invention.

Fig. 3 is a schematic diagram illustrating the orientation of molecular chains in a rolled film produced by the method of the present invention.

In the diagrams, 1 stands for a heating device, 2 for a stock sheet of thermoplastic resin, 3, 3' each for a pressing roll, 4 for a rolled film 5, 5', 6, and 6' each for a roll 10 and 10' each for a spiral curve, S and S' each for a screw part, C for a cylindrical central part, and G for a gap.

## DETAILED DESCRIPTION OF THE INVENTION

To be specific, the method for the production of a rolled film contemplated by this invention is characterized by effecting the production by causing a thermoplastic resin sheet to be rolled, squeezed or calendered with a pair of pressing rolls or cylinders, providing the pressing rolls each with protrusions or grooves or curves, preferably of smooth cross-section in a plane radial to the cylinders curves spiraling in the opposite directions from the center or intermediate portion, rotating the pressing rolls at an equal speed in mutually opposite directions while separated from each other by a prescribed gap, and passing the aforementioned sheet through the gap thereby rolling the sheet simultaneously in the direction of width as well. That is to say no sheet is extended both lengthwise and widthwise. The apparatus of this invention for the production of a rolled film from a thermoplastic resin sheet is characterized by being provided with a pair of screw-shaped rolls each possessing curves spiraling in the opposite directions from the center so that the sheet can be rolled simultaneously in the direction of width as well when the screw-shaped rolls are rotated at an equal speed in the mutually opposite directions as separated by a prescribed gap and the sheet is passed through the gap mentioned above. The protruding and recessed screw portions match each other during rotation and a constant gap is maintaned and the protruding portions appear to move axially of the rolls.

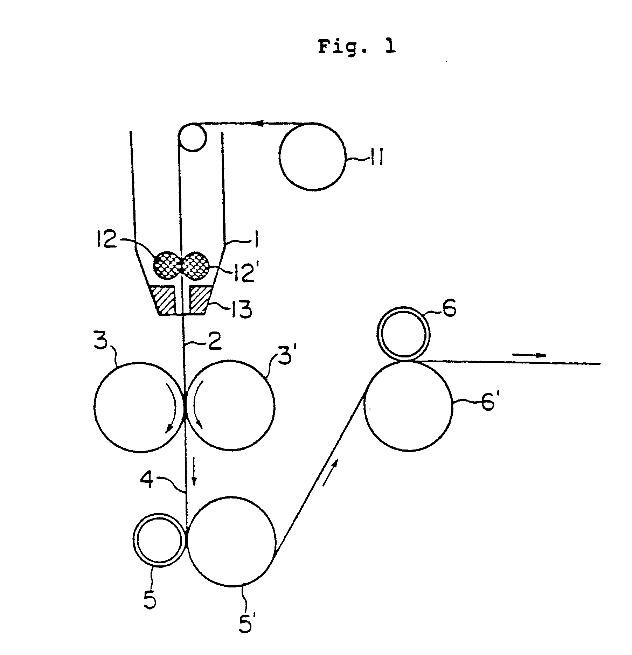

Fig. 1 is a schematic diagram illustrating a typical apparatus to be used for the production of a rolled film of the present invention. Denoted by 1 is a heating device for a stock sheet 2, as depicted in its entire outline. The heating device 1 is provided with a pair of rubber rolls 12, 12' and a heater 13. The stock sheet 2 is fed out of a reel 11. The stock sheet 2 of thermoplastic resin which has been heated to a suitable temperature by the heating device 1 is rolled by being passed through the gap between a pair of pressing rolls 3, 3'. The rolled film consequently obtained is passed through a plurality of pairs of rolls 5, 5', 6, and 6' and then taken up on a reel (not shown). By having the rolls 5, 6 coated with rubber, the advance of the rolled film can be obtained with increased certainty.

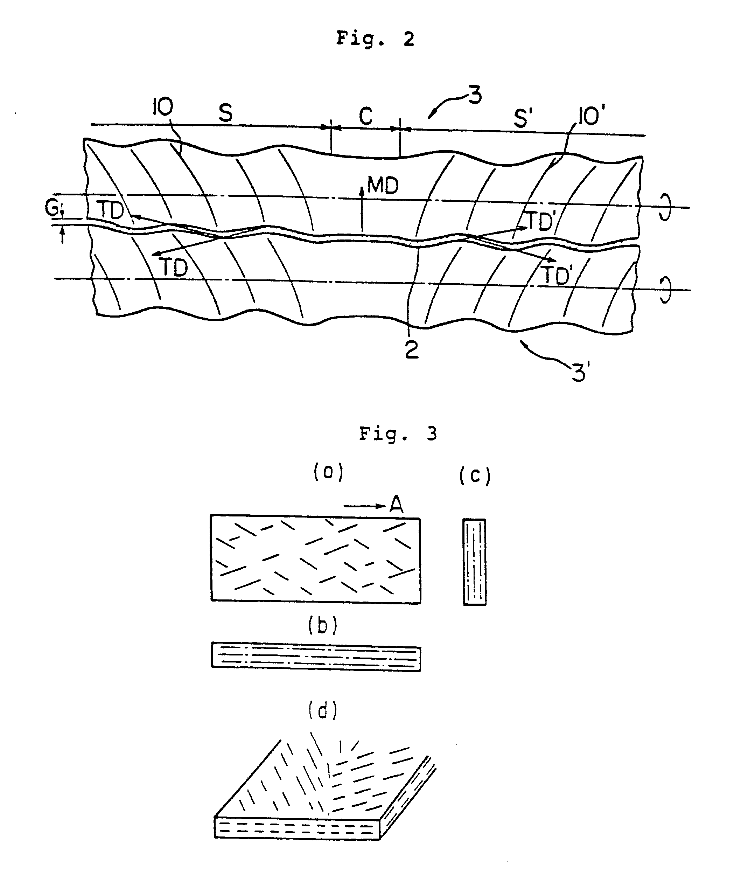

Fig. 2 illustrates the pressing rolls 3, 3' of Fig. 1 in further detail. The pressing rolls 3, 3' each comprise two screw parts S, S' and a cylindrical central part C. The screw parts S, S' which constitute themselves screw rolls each possess spiral curves 10, 10'. The curves 10, 10' are spiraled in mutually opposite directions. The cylindrical central part C serves as a transition part for enabling the oppositely spiral curves 10, 10' to continue smoothly into each other. Owing to this central part C, the otherwise inevitable loss of continuity between the oppositely spiral screw parts across their junction can be prevented. Thus, the cylindrical central part C can be decreased to the smallest allowable length which permits the opposite spiral curves 10, 10' to be smoothly continued into each other.

The pair of screw rolls 3, 3' constructed as described above are opposite side by side to each other across a prescribed gap G and are rotated in the mutually opposite directions so as to pass the thermoplastic sheet 2 through the gap mentioned above. While the sheet 2 is rolled in the direction of passage thereof through the gap G because the gap G is smaller than the thickness of the sheet 2, the sheet 2 is simultaneously rolled outwardly in the direction of width inside the gap G by the screw parts S, S' disposed on the opposite sides. The rolling obtained in the direction of width makes use of the phenomenon that a substance hold between a pair of screws is moved by the rotation of the screws in the direction of axis of the rotation. This phenomenon is induced by the forces TD, TD' exerted in the direction of width upon the sheet 2 as illustrated in Fig. 2. Since the screw parts S, S' on the opposite sides are spiraled in the mutually opposite directions, the forces TD, TD' generated in the direction of width are similarly directed outwardly. Further since the sheet 2 is exposed to the force MD generated by rolling, it is subjected simultaneously to rolling and drawing land, therefore, are elongated longitudinally and laterally at the same time. The pitches of the spiral curves 10, 10' on the screw parts S, S' determine the degree of elongation of the sheet in the direction of width. Thus, they may be suitably selected to obtain a rolled film with a desired degree of elongation. The gap G determines the ratio of drawing of the thermoplastic resin sheet 2 and is generally selected so that the ratio of rolling will fall in the range of 4 to 10. The ratio of elongation by the rolling may be suitably increased by increasing the number of stages of paired screw-shaped rolls in a tandem arrangement.

Fig. 3 is a diagram schematically illustrating the orientation of molecular chains in a rolled film produced by the apparatus of the present invention. Part (a) of the diagram is a plan view of the rolled film, clearly showing that the molecular chains are oriented obliquely relative to the direction A of rolling. Part (b) is a cross section taken in the direction of length of the rolled film and Part (c) a cross section taken in the direction of width of the rolled film, each showing that the molecular chains are oriented parallelly to the film surface by the rolling. Part (d) is a perspective view of the rolled film.

The sheet to be rolled as contemplated by the present invention may be made of any thermoplastic resin. As concrete examples of the thermoplastic resin, there can be cited polyolefin type resins such as polyethylene, polypropylene, ethylene-propylene copolymer, ethylene-vinyl acetate copolymer, and ethylene-ethyl acrylate copolymer; styrene type resins such as polystyrene, acrylonitrile butadiene-styrene copolymer, and acrylonitrile-styrene copolymer; vinyl chloride type resins such a polymethyl methacrylate, polyvinyl chloride, vinyl chloride-vinyl acetate copolymer, vinyl chloride-acrylic ester copolymers, and vinyl chloride-acrylonitrile copolymer; vinyl acetate type resins such as polyvinyl acetate, polyvinyl alcohol, and polyvinyl acetal; cellulose type resins such as cellulose esters and acetyl cellulose; and polyamide type resins such as nylon. Blends of two or more of the resins cited above or laminates of at least two resin layers are also available.

The thermoplastic resin sheet. while being rolled, is desired to have a temperature lower than the softening point thereof. In the case of a sheet of high-density polyethylene, the temperature is desired to fall in the range of 80° to 90° C. If the temperature of the sheet is too close to the softening point thereof, there may arise a disadvantage that the sheet is so soft that the molecular chains in the sheet may not be sufficiently oriented by the rolling and the film itself will partially stick to the pressing rolls.

The ratio of rolling to be desirably obtained by this invention generally falls in the range of 4 to 10 times the original size of sheet. The ratio of drawing effected at the same time in the direction of width is desired to fall in the range of 1.1 to 5 times the original size.

The rolling speed for the production of a rolled film, therefore, is approximately in the range of 5 to 100m/min, the linear pressure of the pressing rolls approximately in the range of 1,000 to 4,000 kg/cm, and the back tension approximately in the range of 0.2 to 6.0 kg/cm. Under the conditions specified above, the rolled film can be obtained in a thickness falling approximately in the range of 20 to 40 μm. The rolled film consequently obtained may be drawn, when necessary, in the direction of length (direction of MD) in a subsequent step.

Now, the present invention will be described more specifically below with reference to a working example.

Example 1:

In an apparatus constructed as illustrated in Fig. 1, a sheet of high-density polyethylene (having a melt index of 1.0 and a density of 0.95) 100 μm in thickness and 400 mm in width was fed through the gap between a pair of screw-shaped rolls having a diameter of 300 mm, an available length of 1,000 mm, and a screw pitch of 60 mm to roll the sheet under a back tension of 1.0 kg/cm and a roll linear tension of 2,000 kg/cm at a rolling speed of 10 m/min. The rolling temperature was 80° C. By this operation, a rolled film was obtained without appreciable spring back or friction hill. The film had a thickness of 20 μm

and a width of 800 mm and was substantially free from such drawbacks as edge beads and neckin.

As described above, the present invention can not only diminish the phenomenon of spring back or friction hill but also lower the force of draft heretofore taken as a bottleneck in the productional efficiency. Thus, it permits production of a rolled film having a large width and high strength and largely avoiding hindrances such as edge beads and neckin. The method of this invention enjoys notably high productivity because it produces simultaneously rolling in the direction of thickness and the direction of width.

**Claims**

1. Method for the production of film by rolling a thermoplastic resin sheet between a pair of spaced pressing rolls, which method comprises rolling the sheet through a gap between a pair of pressing rolls which are provided with curves spiraling in opposite directions from an intermediate portion and are rotated at an equal speed in mutually opposite directions so that when said sheet passes through said gap, it is rolled simultaneously in the direction of thickness of the sheet and in the direction of width of the sheet.

2. Apparatus for the production of a rolled film from a thermoplastic resin sheet, said apparatus comprising a pair of spaced screw-shaped rolls provided with curves spiraling in opposite directions from an intermediate portion and rotatable at an equal speed in mutually opposite directions as so that when said sheet passes through a gap between said pressing rolls, it is rolled simultaneously in the direction of thickness of the sheet and in the direction of width of the sheet.

3. Apparatus according to Claim 2, wherein said screw-shaped rolls each comprise an intermediate cylindrical central part and two screw parts extending in opposite directions from said cylindrical part and said opposite screw parts possess curves spiraling in mutually opposite direction, and said cylindrical central part and said screw parts change smoothly from one to the other

Fig. 1

0287400

Fig. 2

Fig. 3

(a)

(c)

(b)

(d)